# EUROPEAN PATENT SPECIFICATION

(11) **EP 2 124 662 B1**
(45) Date of publication and mention of the grant of the patent: **28.11.2012**
(21) Application number: 08701082.3
(22) Date of filing: 11.01.2008
(51) Int. Cl.: A43B 13/18, A43B 13/40, A43B 23/02, B29D 35/06, A43B 7/14

(54) **INSOLE SOLE UPPER SHOE AND MANUFACTURING METHODS THEREOF**
INNENSOHLE, SOHLE, OBERTEIL, SCHUH UND HERSTELLUNGSVERFAHREN DAFÜR
PREMIÈRE, SEMELLE, TIGE, CHAUSSURE ET LEURS PROCÉDÉS DE FABRICATION

(30) Priority: 29.01.2007 IT MI20070126
(43) Date of publication of application: 02.12.2009
(73) Proprietor: S.P.M. S.A.S. Di Scavini Pierluigi&C., 27029 Vigevano (IT); Ciocca, Maurizio, 27029 Vigevano (IT)
(72) Inventor: CIOCCA, Maurizio, I-27029 Vigevano (IT); SCAVINI, Pierluigi, I-27029 Vigevano (IT)
(74) Representative: Petruzziello, Aldo
(86) International application number: PCT/EP2008/000175
(87) International publication number: WO 2008/092551

(56) References cited:
- DE-U1- 8 520 936
- FR-A- 2 474 834
- US-A- 3 237 319
- US-A1- 2002 092 203
- US-A1- 2005 160 626

## Description

The present invention refers to an insole, a sole, an upper and a shoe, and to the manufacturing methods for said insole, sole and shoe.

As is known, a shoe generally comprises a sole and an upper. The sole comprises an outsole designed to come into contact with the ground and an insole designed to come into contact with the user support. The insole can be a separate part which is rested on or glued to the sole or it can also be made in a single piece with the upper in the case of so-called slip-lasted uppers. Insoles can be flat or anatomically pre-shaped and obtained with various materials and by various procedures.

However, insoles of the prior art present drawbacks due to the fact that they have a pre-set anatomical form and thus they oblige the sole of the foot to adapt itself to their anatomical form which is different from the true anatomy that the sole of each individual foot possesses by nature. All this proves of great importance considering the different shapes of feet which require arch supports with specially dedicated anatomy.

Furthermore, existing insoles offer scant lateral support to the foot, which also proves not very comfortable in the majority of cases.

DE 8520936U1 discloses a footwear wherein elastic members are interposed between the sole and the insole in order to have a damping effect and to increase the comfort of the user.

US 2005/0160626 discloses a shoe with cushioning and speed enhancement midsole constituted by inserts filled with a dilatant compound, housed in corresponding cavities sizes and shaped for receiving them.

US 3237319 discloses ski boots having a pad encircling the ankle portion thereof composed of two layers of a film retaining a thixotropic material.

In addition, despite the use of particular breathable materials to make insoles, appreciable results have not been achieved in ensuring good breathability and air exchange inside the shoe.

All these drawbacks and needs are particularly accentuated in sports shoes with rubber, polyurethane, thermoplastic polyurethane (PTU), thermoplastic rubber (TR) or polyvinyl chloride (PVC) and leather soles.

Object of the present invention is to overcome the drawbacks of the prior art, by providing an insole or a sole or upper that allow convenient, comfortable footwear that adapts to the true anatomy of the users foot to be obtained.

Another object of the present invention is to provide such an insole or sole or upper adapted to ensure good breathability and air exchange inside the shoe.

Yet another object of the present invention is to provide and manufacturing method for an insole, a sole, an upper and a shoe that is practical, versatile, simple and cheap.

These objects are achieved according to the invention with the insole, sole, shoe, upper and manufacturing methods thereof whose characteristics are listed in appended independent claims 1, 5, 11, 16 and 4, 9, 15, 18, respectively.

Advantageous embodiments of the invention are apparent from the dependent claims.

The inventors have surprisingly discovered that the use of at least one elastic member, in pre-established positions, beneath the insole of the shoe allows the insole to adapt anatomically to the shape of the foot and in addition acts as a shock absorber and improves recirculation of air in the gap that is formed between the sole and the insole.

The elastic member can be applied to the undersurface of the insole, to the upper surface of the sole, or it can be interposed between sole and insole. Said elastic member can also be disposed in the inner surface of the upper, in particular in the inner surface of the tongue of the upper, in contact with the upper and/or lateral part of the user's foot.

The elastic member is advantageously a polyurethane-based polymer, such as thixotropic polyurethane, which is poured in the semi-fluid state onto the insole or onto the sole and left to polymerise.

It should be noted that, according to the invention, air exchange inside the shoe is obtained by means of the elastic member disposed beneath the insole, during the movement of the foot (pumping), unlike other known systems which involve special, costly operations on the sole.

Furthermore, the system for applying the elastic member proves to be significantly cheap, in that thixotropic polyurethane is applied by simply pouring and does not need moulds or containing walls of any kind, shape or form, which would prove costly.

Further characteristics of the invention will be made clearer by the detailed description that follows, referring to purely exemplified and therefore non-limiting embodiments thereof, illustrated in the appended drawings, wherein:
Figure 1 is a top plan view of an insole according to the invention;
Figure 2 is a bottom plan view of the insole of Figure 1;
Figure 3 is a cross-sectional view of the insole according to the invention taken along the plane of section III-III of Figure 1;
Figure 4 is a bottom plan view of a second embodiment of the insole according to the invention;
Figure 5 is a cross-sectional view taken along the plane of section V-V of Figure 4;
Figure 6 is a top plan view of a sole according to the invention;
Figure 7 is a cross-sectional view taken along the plane of section VII-VII of Figure 6;
Figure 8 is a side view illustrating a shoe with a slip lathed upper and a sole;
Figure 9 is a side view of the assembled shoe of Figure 8;
Figures 10A, 10B, and 10C are three diagrammatic side views illustrating a manufacturing method of the shoe of Figure 9;
Figure 11 is a bottom plan view of a tongue of the upper illustrated in Figures 8 and 9; and
Figure 12 is a sectional view taken along the plane of section XII-XII of Figure 11.

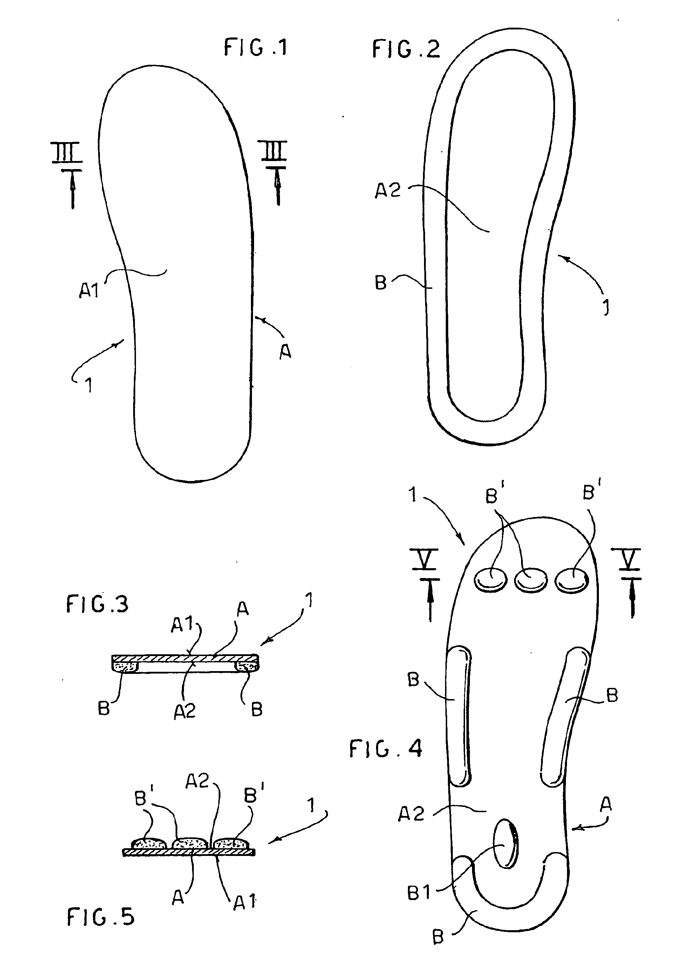

The insole for shoes according to the invention, denoted as a whole with reference numeral 1 is described with the aid of figures 1-4.

The insole I comprises a supporting part A shaped substantially as a sole of a foot. The supporting part A has an upper surface A1 designed to come into contact with the user's foot and an undersurface A2 designed to be disposed on the sole of a shoe.

The supporting part A can be a per se known insole made of a single material or of different materials so as to form a multilayer. Among the materials, texon, cotton, viscose, non-woven fabric, fusbet, felt, sponge, nylon, polyester and polyether can be used. The supporting part A can be spread with polyurethane PU or it can be pre-formed in polyurethane.

Since the materials that make up the supporting part A of the insole are different and generally of variable stiffness, in some cases an insert (arch supports, metal anti-perforation inserts, pre-moulded plastic inserts) which gives the insole suitable mechanical strength according to its use can be inserted into the supporting part A. According to the invention, at least one elastic member B is applied, in pre-set positions, on the undersurface A2 of the supporting part A, so as to protrude downward with respect to the undersurface A2 of the supporting part. In this manner, when the insole 1 is disposed on the sole of a shoe, the elastic member B rests on the sole, whereas the supporting part A remains slightly apart from the sole. As a result, when the shoe is worn, the supporting part A is deformed, following perfectly the shape of the sole of the user's foot.

The elastic member B has a different hardness compared with the hardness of the material of the supporting part A. For example, the elastic member B has Shore A hardness in the range of 20 to 80, preferably Shore A 50 so as to ensure good flexibility.

The elastic member B can be made of monocomponent or bi-component polyurethane material. The elastic member B is advantageously made of thixotropic polyurethane.

The elastic member B takes the form of a strip or cord or gasket with a variable length, a width from 1 to 40 mm, preferably 15 mm, and a thickness from 1 to 40 mm, preferably 5 mm.

As shown in Figures 2 and 3, the elastic member B can take the form of a single strip that surrounds the peripheral edge of the undersurface A2 of the insole support. In this manner, when the user's foot rests on the upper surface A1 of the support, the support A is deformed, sinking with respect to the peripheral elastic member B so as to ensure a lateral grip on the whole perimeter of the foot which offers good stability during use of the shoe.

As shown in Figures 4 and 5, in a second embodiment of the invention a plurality of elastic members B disposed in suitable positions is used. For example, the peripheral edging is discontinuous so as to allow better air recirculation beneath the supporting component A. In the central part, level with the heel, an elastic member B1 acting as a shock absorber is disposed. Elastic members B' (three, for example) are disposed, suitably spaced from each other, to coincide with the gaps between the toes so as to fill the empty spaces between the toes.

The insole 1 can be rested on the sole or the elastic members B can be glued to the sole.

Alternatively, grooved seats in which the elastic members B engage can be formed on the upper surface of the sole. In any case, the supporting part A of the insole must not be constrained to the sole so that it can be deformed optimally.

The insole according to the invention can be attained by the following method:
- a supporting sheet of material suitable for insoles is fed on to a work surface;
- the elastic material B is disposed in suitable positions on the supporting sheet so as to form pre-established patterns; and
- the supporting sheet with the elastic material B applied is sent to a cutting station in which it is cut so as to form the individual insoles.

Obviously cutting of the insoles can take place before application of the elastic material B.

The elastic member B is preferably poured in the fluid state onto the undersurface A2 of the supporting part and left to polymerise so as to adhere to the supporting surface A and expand in thickness. It should be noted that this manufacturing system does not require the use of moulds, containing boards or glues and integrates perfectly into automatic manufacturing methods for insoles.

However, as an alternative, the elastic member B can be made separately and glued, by means of suitable glues, onto the undersurface A2 of the supporting part. Otherwise the insole 1 can be made by moulding and the elastic member 2 can be injected into the mould.

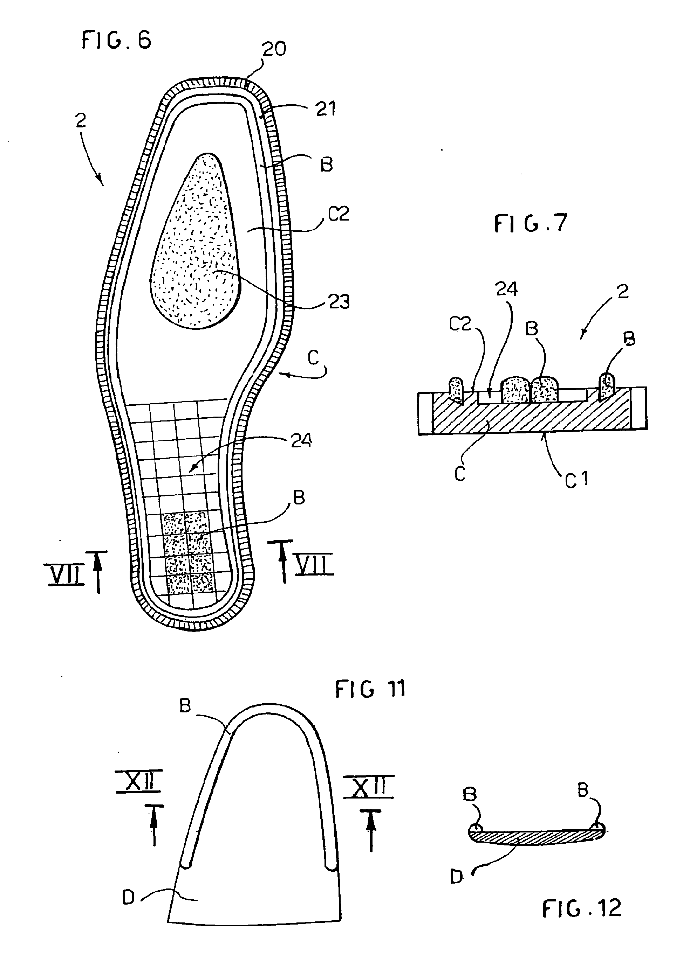

As shown in figures 6 and 7, in an entirely similar way to the insole, the invention also extends to a sole 2. The sole 2 comprises a preformed support C, in the form of a conventional sole, made with materials commonly used for soles, such as for example polyurethane, PVC, TR, TPU, leather or rubber.

The pre-formed support C has an undersurface C1 designed to come into contact with the ground and an upper surface C2 designed to receive an insole. The elastic member B, like that described previously, is disposed, in suitable positions, on the upper surface C2 of the sole.

By way of example, the sole 2 can comprise a pricker 20 along its peripheral edge and a breathable midsole 23 provided with microholes. On the upper surface C2 of the sole support, near the pricker 20, a channel 21 with an undercut groove which follows the periphery of the sole is formed. The channel 21 is filled with the elastic member B so that the elastic member B protrudes upwards from the upper surface C2 of the sole. In addition, cells 24 adapted to be filled with the elastic material B can be formed in the upper surface C2 of the sole.

Once the sole 2 according to the invention has been completed, a conventional insole can be disposed on the sole 2, resting it or gluing it on the protruding elastic member B, so as to obtain the same anatomical effect described previously.

The procedure for producing the sole 2 according to the invention comprises the following steps:
- feeding a preformed sole support C onto a work table;
- applying the elastic member B, in pre-set positions, on the upper surface C2 of the support; and
- sending the complete sole 2 to the subsequent processing and assembly stages for formation of the shoe.

Application of the elastic member B is carried out in a similar way to that described previously for the insole 1.

The support C can optionally have grooved seats 21 and 24 to receive the elastic member B. In this case the grooved seats 21 and 24 can be made during the moulding stage of the sole support C or later.

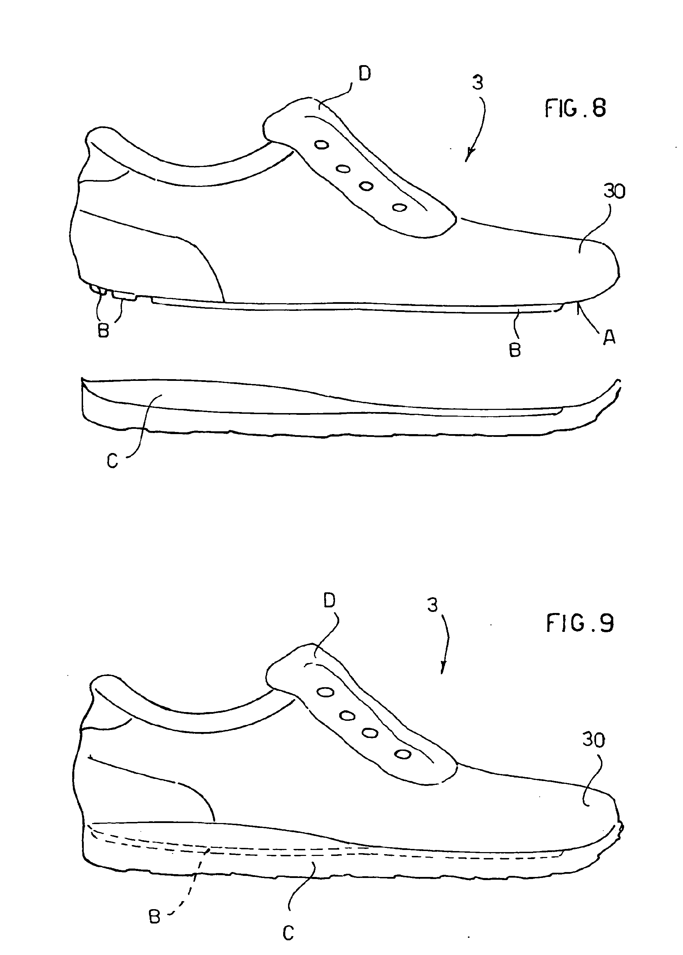

With reference to Figures 8 and 9, a shoe made according to the invention, designated as a whole with reference numeral 3, is described. The shoe 3 comprises an upper 30 of the slip lasted type, that is, the upper 30 has an insole A made in a single piece therewith.

In this case the elastic member B is applied to the undersurface of the insole A of the slip-lasted upper in a similar way to that described previously. At this point a sole C is fastened to the upper 30, so as to obtain a shoe 3 that has the elastic member B disposed between the sole C and the insole A of the slip-lathed upper.

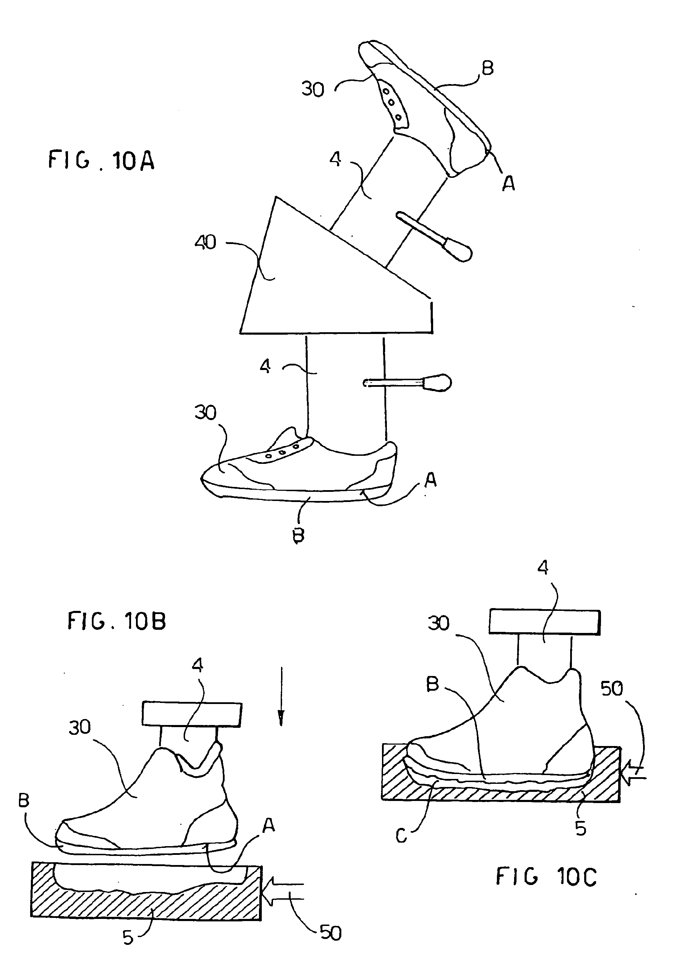

With reference to figures 10A, 10B and 10C, a possible manufacturing method for the shoe 3 with slip-lasted upper 30 is described.

The slip-lasted upper 30 is placed on a form 4 supported by a form support 40. The form 4 is moved so that the insole A of the slip-lasted upper is disposed on an upward facing horizontal plane.

At this point the elastic member B is applied to the outer surface of the insole A of the slip-lasted upper and the time necessary for polymerisation thereof is allowed to elapse.

Subsequently, as shown in Figure 10B the form 4 is overturned and lowered towards the mould 5 provided with at least one injection or pouring nozzle 50. In this manner the lower part of the upper 30 and thus also the elastic member B are situated inside the mould 5.

Lastly, as shown in Figure 10C, the plastic material, such as PU for example, is injected or poured from the nozzle 50 into the mould 5 to form the sole C which adheres to the upper 30. In this manner the elastic member B is disposed between the sole C and insole A of the upper 30.

According to the invention, the elastic member B can also be disposed in suitable positions in the inner surface of the upper 30 so as to come into direct contact with the user's foot and allow the upper 30 to adapt to the anatomy of the foot.

In particular, the elastic member B can be disposed on the inner surface of the tongue D of the upper, as shown in Figures 11 and 12. In this case the procedure for making the tongue D of the upper is entirely identical to that described for making the insole.

Numerous changes and modifications of detail within the reach of a person skilled in the art can be made to the present embodiments of the invention without thereby departing from the scope of the invention, as set forth in the appended claims.

## Claims

1. An insole (1) comprising a support (A) having a substantially similar shape to the sole of a foot, wherein in pre-set areas on the undersurface (A2) of said support of the insole at least one elastic member (B) having a different hardness from that of the supporting part of the insole and protruding downward from the undersurface of the supporting part of the insole is provided, **characterised in that** said elastic member (B) is thixotropic polyurethane shaped as a strip or cord having a width between 1 and 40 mm and a thickness between 1 and 40 mm.

2. An insole (1) according to claim 1, **characterised in that** said elastic member (B) has a shore A hardness in the range of 20 to 80.

3. An insole (1) according to any one of the preceding claims, **characterised in that** said elastic member (B) is disposed along the peripheral edge of the insole.

4. A manufacturing method for an insole (1) according to any one of the preceding claims, comprising the application of at least one elastic member (B) on the under surface (A2) of a support (A) of the insole, having a different hardness from that of the supporting part of the insole **characterised in that** said elastic member is poured in the semi-fluid state onto the support of the insole and left to polymerise so as to solidify and expand in thickness and **in that** said at least one elastic member (B) is shaped as a strip or cord having a width between 1 and 40 mm and a thickness between 1 and 40 mm said elastic member being thixotropic polyurethane.

5. A sole (2) comprising a support (C) having a shape substantially similar to that of the sole of a foot, wherein on the upper surface (C2) of said support of the sole there is provided, in pre-set areas, at least one elastic member (B) having a different hardness from that of the supporting part of the sole and protruding upward from the upper surface of the supporting part of the sole, **characterised in that** said elastic member (B) is thixotropic polyurethane shaped as a strip or cord having a width between 1 and 40 mm and a thickness between 1 and 40 mm.

6. A sole (2) according to claim 5, **characterised in that** said elastic member (B) has a shore A hardness in the range of 20 to 80.

7. A sole (2) according to any one of claims 5 and 6, **characterised in that** said elastic member (B) is disposed near the peripheral edge of the sole.

8. A sole (2) according to any one of claims 5 to 7, **characterised in that** grooved seats (21, 24) within which said elastic member (B) is disposed are formed on the upper surface (C2) of said support.

9. A method for manufacturing a sole (2) according to any one of claims 5 to 8, comprising application of at least one elastic member (B) on the upper surface (C2) of a support (C) of the sole having a different hardness from that of the supporting part of the sole, **characterised in that** said elastic member (B) is poured in the semi-fluid state onto the support of the sole and left to polymerise so as to solidify and expand in thickness and **in that** said at least one elastic member (B) is shaped as a strip or cord having a width between 1 and 40 mm and a thickness between 1 and 40 mm, said elastic member being thixotropic polyurethane.

10. A method according to claim 9, **characterised in that** it comprises formation of grooved seats (21, 24) on the upper surface of the sole and subsequent application of the elastic member (B) in said grooved seats.

11. A shoe (3) comprising a sole and an insole, wherein between said sole and said insole at least one elastic member (B) having a different hardness from that of the sole and the insole is disposed in pre-set areas between said sole and said insole, **characterised in that** said elastic member (B) is thixotropic polyurethane shaped as a strip or cord having a width between 1 and 40 mm and a thickness between 1 and 40 mm.

12. A shoe (3) according to claim 11, **characterised in that** said elastic member (B) has a Shore A hardness in the range of 20 to 80.

13. A shoe (3) according to any one of claims 11 or 12, **characterised in that** at least one elastic member (B) is disposed near the peripheral edge of the sole.

14. A shoe (3) according to any one of claims 11 to 13, **characterised in that** grooved seats within which is disposed said elastic member (B) are formed on the upper surface of the sole.

15. A method of producing a shoe (3) according to any one of the preceding claims 11 to 14 which comprises the following steps:
- pouring in the semi-fluid state at least one elastic member (B) having a different hardness from that of the supporting part of the insole on the under surface of an insole of a slip-lasted upper (30), and letting it to polymerise so as to solidify and expand in thickness;
- placing the lower part of the slip-lasted upper with the elastic member applied inside a mould (5),
- injection moulding of plastic material for formation of the sole which adheres to the upper, so that the elastic member (B) remains interposed between the sole and the insole of the upper **characterised in that** said at least one elastic member (B) is thixotropic polyurethane shaped as a strip or cord having a width between 1 and 40 mm and a thickness between 1 and 40 mm.

16. An upper (30) wherein at least one elastic member (B) having a different hardness from that of the upper and protruding inwards to come into contact with the foot is provided in pre-set areas on the inner surface of said upper, **characterised in that** said elastic member (B) is thixotropic polyurethane shaped as a strip or cord having a width between 1 and 40 mm and a thickness between 1 and 40 mm.

17. An upper (30) according to claim 16, **characterised in that** said elastic member (B) is disposed in the undersurface of the tongue (D) of the upper.

18. Use of an elastic member (B) in insoles (1), in soles (2), in uppers (30), or in shoes (3), said elastic member having a different hardness from that of the upper or of the supporting part of the insole or sole, **characterised in that** said elastic member (B) is thixotropic polyurethane shaped as a strip or cord having a width between 1 and 40 mm and a thickness between 1 and 40 mm.

## Patentansprüche

1. Innensohle (1), die einen Träger (A) aufweist, der eine im Wesentlichen ähnliche Form wie die Sohle eines Fußes hat, wobei in voreingestellten Bereichen auf der Unterfläche (A2) des Trägers der Innensohle mindestens ein elastisches Element (B) bereitgestellt ist, das eine unterschiedliche Härte von der des tragenden Teils der Innensohle hat und von der Unterfläche des tragenden Teils der Innensohle nach unten vorsteht, **dadurch gekennzeichnet, dass** das elastische Element (B) thixotropes Polyurethan ist, das als ein Streifen oder eine Schnur ausgebildet ist, der/die eine Breite zwischen 1 und 40 mm und eine Stärke zwischen 1 und 40 mm hat.

2. Innensohle (1) nach Anspruch 1, **dadurch gekennzeichnet, dass** das elastische Element (B) eine Shore A-Härte in dem Bereich von 20 bis 80 hat.

3. Innensohle (1) nach einem der vorhergehenden Ansprüche, **dadurch gekennzeichnet, dass** das elastische Element (B) entlang der Umfangskante der Innensohle angeordnet ist.

4. Herstellungsverfahren für eine Innensohle (1) nach einem der vorhergehenden Ansprüche, das das Aufbringen mindestens eines elastischen Elements (B) auf der unteren Oberfläche (A2) eines Trägers (A) der Innensohle aufweist, die eine unterschiedliche Härte von der des tragenden Teils der Innensohle hat, **dadurch gekennzeichnet, dass** das elastische Element im halb flüssigen Zustand auf den Träger der Innensohle gegossen wird und polarisiert, so dass es sich verfestigt und in Stärke ausdehnt, und dass das mindestens eine elastische Element (B) als ein Streifen oder eine Schnur geformt ist, der/die eine Breite zwischen 1 und 40 mm und eine Stärke zwischen 1 und 40 mm hat.

5. Sohle (2), die einen Träger (C) aufweist, der eine Form hat, die im Wesentlichen ähnlich der der Sohle eines Fußes ist, wobei auf der Oberfläche (C2) des Trägers der Sohle in voreingestellten Bereichen mindestens ein elastisches Element (B) bereitgestellt ist, das eine unterschiedliche Härte von der des tragenden Teils der Sohle hat und von der oberen Oberfläche des tragenden Teils der Sohle nach oben vorsteht, **dadurch gekennzeichnet, dass** das elastische Element (B) thixotropes Polyurethan ist, das als ein Streifen oder eine Schnur geformt ist, der/die eine Breite zwischen 1 und 40 mm und eine Stärke zwischen 1 und 40 mm hat.

6. Sohle (2) nach Anspruch 5, **dadurch gekennzeichnet, dass** das elastische Element (B) eine Shore A-Härte in dem Bereich von 20 bis 80 hat.

7. Sohle (2) nach einem der Ansprüche 5 und 6, **dadurch gekennzeichnet, dass** das elastische Element (B) in der Nähe der Umfangskante der Sohle angeordnet ist.

8. Sohle (2) nach einem der Ansprüche 5 bis 7, **dadurch gekennzeichnet, dass** gerillte Sitze (21, 24), innerhalb welcher das elastische Element (B) angeordnet ist, auf der oberen Oberfläche (C2) des Trägers ausgebildet sind.

9. Verfahren zum Herstellen einer Sohle (2) nach einem der Ansprüche 5 bis 8, die das Aufbringen mindestens eines elastischen Elements (B) auf der Oberfläche (C2) eines Trägers (C) der Sohle, das eine unterschiedliche Härte hat als der tragende Teil der Sohle, aufweist, **dadurch gekennzeichnet, dass** das elastische Element (B) in dem halb flüssigen Zustand auf den Träger der Sohle gegossen wird und polymerisiert, um sich zu verfestigen und in Stärke auszudehnen, und dass das mindestens eine elastische Element (B) als ein Streifen oder eine Schnur geformt ist, der/die eine Breite zwischen 1 und 40 mm und eine Stärke zwischen 1 und 40 mm hat.

10. Verfahren nach Anspruch 9, **dadurch gekennzeichnet, dass** es das Bilden gerillter Sitze (21, 24) auf der oberen Oberfläche der Sohle und das darauf folgende Aufbringen des elastischen Elements (B) in den gerillten Sitzen aufweist.

11. Schuh (3), der eine Sohle und eine Innensohle aufweist, wobei zwischen der Sohle und der Innensohle mindestens ein elastisches Element (B), das eine unterschiedliche Härte von der der Sohle und der Innensohle hat, in voreingestellten Bereichen zwischen der Sohle und der Innensohle angeordnet ist, **dadurch gekennzeichnet, dass** das elastische Element (B) thixotropes Polyurethan ist, das als ein Streifen oder eine Schnur geformt ist, der/die eine Breite zwischen 1 und 40 mm und eine Stärke zwischen 1 und 40 mm hat.

12. Schuh (3) nach Anspruch 11, **dadurch gekennzeichnet, dass** das elastische Element (B) eine Shore A-Härte in dem Bereich von 20 bis 80 hat.

13. Schuh (3) nach einem der Ansprüche 11 oder 12, **dadurch gekennzeichnet, dass** das mindestens eine elastische Element (B) in der Nähe der Umfangskante der Sohle angeordnet ist.

14. Schuh (3) nach einem der Ansprüche 11 bis 13, **dadurch gekennzeichnet, dass** die gerillten Sitze, in welchen das elastische Element (B) angeordnet ist, auf der oberen Oberfläche der Sohle ausgebildet sind.

15. Verfahren zum Herstellen eines Schuhs (3) nach einem der vorhergehenden Ansprüche 11 bis 14, das die folgenden Schritte aufweist:
- Gießen in dem halb flüssigen Zustand mindestens eines elastischen Elements (B), das eine unterschiedliche Härte von der des tragenden Teils der Innensohle hat, auf der unteren Oberfläche einer Innensohle eines direkt angespritzten Obermaterials (30) und Polymerisieren, um sich zu verfestigen und in Stärke auszudehnen;
- Platzieren des unteren Teils des direkt angespritzten Obermaterials mit dem elastischen Element aufgebracht innerhalb einer Form (5),
- Spritzgießen von Kunststoffmaterial zum Bilden der Sohle, die an dem Obermaterial haftet, so dass das elastische Element (B) zwischen der Sohle und der Innensohle des Obermaterials eingefügt bleibt,
**dadurch gekennzeichnet, dass** das mindestens eine elastische Element (B) thixotropes Polyurethan ist, das als ein Streifen oder eine Schnur ausgebildet ist, der/die eine Breite zwischen 1 und 40 mm und eine Stärke zwischen 1 und 40 mm hat.

16. Obermaterial (30), wobei mindestens ein elastisches Element (B), das eine unterschiedliche Härte als die des Obermaterials hat und nach innen vorsteht, um mit dem Fuß in Berührung zu kommen, in voreingestellten Bereichen auf der inneren Oberfläche des Obermaterials bereitgestellt ist, **dadurch gekennzeichnet, dass** das elastische Element (B) thixotropes Polyurethan ist, das als ein Streifen oder eine Schnur geformt ist, der/die eine Breite zwischen 1 und 40 mm und eine Stärke zwischen 1 und 40 mm hat.

17. Obermaterial (30) nach Anspruch 16, **dadurch gekennzeichnet, dass** das elastische Element (B) in der unteren Oberfläche der Zunge (D) des Obermaterials angeordnet ist.

18. Gebrauch eines elastischen Elements (B) in Innensohlen (1), in Sohlen (2), in Obermaterialien (30) oder in Schuhen (3), wobei das elastische Element eine unterschiedliche Härte hat als die des Obermaterials oder des tragenden Teils der Innensohle oder Sohle, **dadurch gekennzeichnet, dass** das elastische Element (B) thixotropes Polyurethan ist, das als ein Streifen oder eine Schnur geformt ist, der/die eine Breite zwischen 1 und 40 mm und eine Stärke zwischen 1 und 40 mm hat.

## Revendications

1. Première (1) comprenant un support (A) possédant une forme essentiellement similaire à la plante d'un pied, dans laquelle dans des zones prédéterminées sur la surface inférieure (A2) dudit support de la première, au moins un élément élastique (B) possédant une rigidité différente de celle de la partie de support de la première et faisant saillie vers le bas depuis la surface inférieure de la partie de support de la première est prévu, **caractérisée en ce que** ledit élément élastique (B) est du polyuréthane thixotrope formé comme une bande ou un cordon possédant une largeur entre 1 et 40 mm et une épaisseur entre 1 et 40 mm.

2. Première (1) selon la revendication 1, **caractérisée en ce que** ledit élément élastique (B) possède une dureté Shore A dans la gamme de 20 à 80.

3. Première (1) selon l'une quelconque des revendications précédentes, **caractérisée en ce que** ledit élément élastique (B) est disposé le long du bord périphérique de la première.

4. Procédé de fabrication pour une première (1) selon l'une quelconque des revendications précédentes, comprenant l'application d'au moins un élément élastique (B) sur la surface inférieure (A2) d'un support (A) de la première, possédant une dureté différente de celle de la partie de support de la première, **caractérisé en ce que** ledit élément élastique est versé dans l'état semi-fluide sur le support de la première et laissé à polymériser afin qu'il se solidifie et que son épaisseur augmente, et **en ce que** l'au moins un élément élastique (B) est formé comme une bande ou un cordon possédant une largeur entre 1 et 40 mm et une épaisseur entre 1 et 40 mm, ledit élément élastique étant du polyuréthane thixotrope.

5. Semelle (2)comprenant un support (C) possédant une forme essentiellement similaire à celle de la plante d'un pied, dans laquelle il est fourni sur la surface supérieure (C2) dudit support de la semelle, dans des zones prédéterminées, au moins un élément élastique (B) possédant une dureté différente de celle de la partie de support de la semelle et faisant saillie vers le haut depuis la surface supérieure de la partie de support de la semelle, **caractérisée en ce que** ledit élément élastique (B) est du polyuréthane thixotrope formé comme une bande ou un cordon possédant une largeur entre 1 et 40 mm et une épaisseur entre 1 et 40 mm.

6. Semelle (2) selon la revendication 5, **caractérisée en ce que** ledit élément élastique (B) possède une dureté Shore A dans la gamme de 20 à 80.

7. Semelle (2) selon l'une quelconque des revendications 5 et 6, **caractérisée en ce que** ledit élément élastique (B) est disposé à proximité du bord périphérique de la semelle.

8. Semelle (2) selon l'une quelconque des revendications 5 à 7, **caractérisée en ce que** des assises rainurées (21, 24) dans lesquelles ledit élément élastique (B) est disposé sont formées sur la surface supérieure (C2) dudit support.

9. Procédé de fabrication d'une semelle (2) selon l'une quelconque des revendications 5 à 8, comprenant l'application d'au moins un élément élastique (B) sur la surface supérieure (C2) d'un support (C) de la semelle, possédant une dureté différente de celle de la partie de support de la semelle, **caractérisé en ce que** ledit élément élastique (B) est versé dans l'état semi-fluide sur le support de la semelle et laissé à polymériser afin qu'il se solidifie et que son épaisseur augmente, et **en ce que** l'au moins un élément élastique (B) est formé comme une bande ou un cordon possédant une largeur entre 1 et 40 mm et une épaisseur entre 1 et 40 mm, ledit élément élastique étant du polyuréthane thixotrope.

10. Procédé selon la revendication 9, **caractérisé en ce qu'**il comprend la formation d'assises rainurées (21, 24) sur la surface supérieure de la semelle et une application ultérieure de l'élément élastique (B) dans lesdites assises rainurées.

11. Chaussure (3) comprenant une semelle et une première, dans laquelle entre ladite semelle et ladite première au moins un élément élastique (B) possédant une dureté différente de celle de la semelle et de la première est disposé dans des zones prédéterminées entre ladite semelle et ladite première, **caractérisé en ce que** ledit élément élastique (B) est du polyuréthane thixotrope formé comme une bande ou un cordon possédant une largeur entre 1 et 40 mm et une épaisseur entre 1 et 40 mm.

12. Chaussure (3) selon la revendication 11, **caractérisée en ce que** ledit élément élastique (B) possède une dureté Shore A dans la gamme de 20 à 80.

13. Chaussure (3) selon l'une quelconque des revendications 11 ou 12, **caractérisée en ce qu'**au moins un élément élastique (B) est disposé à proximité du bord périphérique de la semelle.

14. Chaussure (3) selon l'une quelconque des revendications 11 à 13, **caractérisée en ce que** des assises rainurées dans lesquelles est disposé l'élément élastique (B) sont formées sur la surface supérieure de la semelle.

15. Procédé de production d'une chaussure (3) selon l'une quelconque des revendications précédentes 11 à 14, qui comprend les étapes suivantes consistant à :
- verser dans l'état semi-fluide au moins un élément élastique (B) possédant une dureté différente de celle de la partie de support de la première sur la surface inférieure d'une première d'une tige montée sur une forme (30), et le laisser se polymériser afin qu'il se solidifie et que son épaisseur augmente,
- placer la partie inférieure de la tige montée sur une forme avec l'élément élastique appliqué à l'intérieur d'un moule (5),
- mouler par injection un matériau en plastique pour la formation de la semelle qui adhère à la tige, de sorte que l'élément élastique (B) reste interposé entre la semelle et la première de la tige,
**caractérisé en ce que** ledit au moins un élément élastique (B) est du polyuréthane thixotrope formé comme une bande ou un cordon possédant une largeur entre 1 et 40 mm et une épaisseur entre 1 et 40 mm.

16. Tige (30) dans laquelle au moins un élément élastique (B) possédant une dureté différente de celle de la tige et faisant saillie vers l'intérieur pour venir au contact du pied est prévu dans des zones prédéterminées sur la surface interne de ladite tige, **caractérisée en ce que** ledit élément élastique (B) est du polyuréthane thixotrope formé comme une bande ou un cordon possédant une largeur entre 1 et 40 mm et une épaisseur entre 1 et 40 mm.

17. Tige (30) selon la revendication 16, **caractérisée en ce que** ledit élément élastique (B) est disposé dans la surface inférieure de la languette (D) de la tige.

18. Utilisation d'un élément élastique (B) dans des premières (1), dans des semelles (2), dans des tiges (30), ou dans des chaussures (3), ledit élément élastique possédant une dureté différente de celle de la tige ou de la partie de support de la première ou de la semelle, **caractérisée en ce que** ledit élément élastique (B) est du polyuréthane thixotrope formé comme une bande ou un cordon possédant une largeur entre 1 et 40 mm et une épaisseur entre 1 et 40 mm.
